# DEMANDE DE BREVET EUROPEEN

(11) **EP 1 715 321 A1**
(43) Date de publication de la demande: **25.10.2006**
(21) Numéro de dépôt: 06300400.6
(22) Date de dépôt: 24.04.2006
(51) Int. Cl.: G01M 9/00, G01M 9/06, G01M 17/007

(54) **Procédé de test d'un véhicule automobile**

(30) Priorité: 22.04.2005 FR 0551046
(71) Demandeur: Renault SAS, 92100 Boulogne Billancourt (FR)
(72) Inventeur: HIBON, Olivier, 27400, LOUVIERS (FR); MARTINA, Jean Christophe, 27200, VERNON (FR)

(57) **Abrégé**

Procédé de test d'un véhicule automobile sur un banc à rouleau, le rouleau simulant une force résistante globale déterminée à partir d'une force de frottement, d'une force résistante (F-pente) et de l'accélération des roues du véhicules ; selon l'invention, la force résistance (F-pente) est déterminée à partir de la distance parcourue du véhicule.

## Description

La présente invention concerne les procédés de test des véhicules sur des bancs de test du type banc à rouleaux, et de préférence sur des bancs de test du type banc à rouleaux qui sont installés en soufflerie.

L'objectif de ces bancs est de tester les véhicules en simulant des conditions de roulage prédéfinies. Ces bancs sont généralement constitués d'un rouleau qui simule un couple résistant représentatif de la force résistante globale appliquée aux roues motrices du véhicule. Ce banc permet par exemple de tester l'aspect « thermique » du véhicule dans le but de vérifier que le circuit de refroidissement du moteur est correctement dimensionné.

Cette force résistante globale est établie par le procédé de test du véhicule ; elle dépend de :
- de la force résistance aérodynamique (F-aéro) ;
- de la force résistante de roulement (F-roulement) ;
- de l'accélération du véhicule (F-accélération) ;
- et de la pente (F-pente).

Les procédés actuels fonctionnent selon un mode appelé « couple calculé ». Ils figent le paramètre F-pente. Ainsi, pour une pente donnée, la force résistante globale dépend :
- de F-aéro ;
- de F-roulement
- et de F-accélération.

F-aéro et F-roulement dépendent de la vitesse simulée du véhicule, et F-accélération dépend de la consigne d'accélération que le conducteur donne au véhicule. Dans ce type de procédé, on considère que l'on a une pente moyenne qui est qui constante.

Pour simuler au mieux les conditions de roulage du véhicule, on définit des parcours routiers. Cependant, ces parcours ne simulent pas totalement la réalité, car il faut pouvoir tenir compte de la pente du parcours à chaque instant. De plus, lors de tests de véhicules équipés de boîtes automatiques, il peut se produire un emballement du moteur car la pente moyenne ne correspond pas forcément à la charge du moteur.

Un des objectifs de l'invention est de simuler les conditions de roulage en faisant varier la pente à chaque instant.

L'invention propose dans ce but un procédé de test d'un véhicule automobile sur un banc à rouleau, dans lequel la force résistante (F-pente) est déterminée en fonction de la distance parcourue du véhicule.

Pour déterminer la force résistance F-pente, le procédé comporte les étapes suivantes :
- détermination de la distance parcourue à partir de la vitesse simulée du véhicule.
- détermination de l'altitude en fonction de la distance parcourue.
- détermination de la pente en fonction de l'altitude.

L'altitude peut être déterminée à l'aide d'une cartographie préenregistrée représentant l'altitude en fonction de la distance parcourue.

Le procédé peut comporter une étape d'affichage de la consigne de la vitesse à atteindre, la consigne de vitesse provenant d'une cartographie représentant la vitesse en fonction de la distance.

La présente invention et ses avantages seront mieux compris à la lecture de la description détaillée d'un mode de réalisation pris à titre d'exemple et nullement limitatif.

Le procédé est utilisé sur un banc de test de véhicule, de préférence en soufflerie climatique. La soufflerie climatique permet de recréer des conditions de circulation et de température d'air représentatives d'un essai réel. Le rouleau quant à lui simule une charge qui est appliquée sur les roues motrices du véhicule. Le procédé pilote ces éléments simultanément pour récréer des conditions de roulage proche de la réalité.

La charge qui est simulée par le rouleau est représentée par une force résistante globale qui comprend :
- une force résistante aérodynamique (F-aéro);
- une force résistante de roulement (F-roulement) ;
- une force représentative de l'accélération du véhicule (F-accélération) ;

Ces trois forces résistantes sont déterminées à partir de la vitesse simulée du véhicule.

La force résistante globale comprend également une force qui dépend de la pente, appelée (F-pente). Cette force (F-pente) se représente par la formule classique : (*F* - *pente*) = *M* .*g*.*sin*(α) (α étant la pente, c'est-à-dire l'angle d'inclinaison de la route qui est simulé).

Dans les essais classiques de véhicules, on fige ce paramètre, c'est-à-dire que l'on considère que l'inclinaison de la route est constante sur tout le parcours.

Selon l'invention, l'angle α évolue dans le temps, pour permettre de simuler des conditions de roulage plus proches d'un parcours réel, comme par exemple dans le cas d'un essai simulé d'un parcours en montagne. Pour cela, le procédé selon l'invention détermine la force résistante F-pente à partir de la distance parcourue.

Le procédé va déterminer, pour un intervalle de temps donné, la distance parcourue à partir de la vitesse de rotation du rouleau, par exemple, ou bien à l'aide du compteur kilométrique du véhicule.

Cette distance parcourue sert à en déduire l'altitude qui, comparée à sa valeur précédente, permet de calculer la pente.

L'altitude est déterminée à partir d'une cartographie préenregistrée représentant l'altitude en fonction de la distance parcourue. Cette cartographie peut être établie à partir d'un enregistrement de parcours d'un véhicule à l'aide d'un appareil de type GPS, ou bien à partir d'une carte géographique qui comporte des indications d'altitude.

Le procédé calcul ainsi la force résistante F-pente et l'intègre à la force résistance globale.

Selon une caractéristique supplémentaire de l'invention, le procédé peut intégrer une consigne de vitesse à atteindre. Lors de l'essai, le conducteur du véhicule s'applique alors à respecter la consigne de vitesse qui lui est communiquée. Cette consigne de vitesse est également établie à partir de la distance parcourue ; elle peut provenir d'une cartographie représentant la vitesse en fonction de la distance. Ainsi, on peut recréer des conditions de roulage qui se rapproche des conditions réelles. Ceci permet non seulement de pouvoir adapter la vitesse en fonction de la pente qui varie, mais aussi de simuler des passages dans des virages. Un autre avantage est que l'on peut envisager plusieurs consignes de vitesses qui dépendent des styles de conduites. On peut alors avoir un mode normal, un mode sportif, voir un mode « véhicule chargé ». L'invention présente un avantage majeur lors de tests de véhicules équipés d'une boite de vitesse automatique, car la charge demandée au moteur sera alors en relation avec la charge appliquée sur le rouleau qui dépendra notamment de la pente variable.

## Revendications

1. Procédé de test d'un véhicule automobile sur un banc à rouleau, le rouleau simulant une force résistante globale déterminée à partir d'une force de frottement, d'une force résistante (F-pente) et de l'accélération des roues du véhicules, la force résistance (F-pente) étant déterminée à partir de la distance parcourue du véhicule, **caractérisé en ce que** qu'il comporte une étape d'affichage de la consigne de la vitesse à atteindre.

2. Procédé selon la revendication 1, **caractérisé en ce que**, pour déterminer la force résistante (F-pente), il comporte les étapes suivantes :
- détermination de la distance parcourue à partir de la vitesse.
- détermination de l'altitude en fonction de la distance parcourue.
- détermination de la pente en fonction de l'altitude.

3. Procédé selon l'une quelconque des revendications 1 à 2, **caractérisé en ce que** l'altitude est déterminée à l'aide d'une cartographie préenregistrée représentant l'altitude en fonction de la distance parcourue.

4. Procédé selon l'une quelconque des revendications 1 à 3, **caractérisé en ce que** la consigne de vitesse provient d'une cartographie représentant la vitesse en fonction de la distance.

5. Banc de test d'un véhicule automobile installé en soufflerie climatique, **caractérisé en ce que** la charge appliquée sur le véhicule est calculé par le procédé de test selon l'une quelconque des revendications 1 à 4.
